# EUROPEAN PATENT SPECIFICATION

(11) **EP 1 602 432 B1**
(45) Date of publication and mention of the grant of the patent: **21.09.2011**
(21) Application number: 05009962.1
(22) Date of filing: 06.05.2005
(51) Int. Cl.: B23H 7/10, B23H 11/00, H01R 13/24

(54) **Flexible electrical connection member for a wire electrical discharge machine**
Flexible elektrische Leiterverbindung für Drahtfunkenerosionsbearbeitungsmaschine
Connection flexible pour machine d'usinage par électroérosion par fil

(30) Priority: 04.06.2004 CH 9432004
(43) Date of publication of application: 07.12.2005
(73) Proprietor: Agie Charmilles SA, 6616 Losone (CH)
(72) Inventor: Batelaan, Dirk Cornelis, 1212 Grand Lancy (CH); Navarrete, Miguel, 1204 Genève (CH); Terekhov, Konstantin, 1214 Vernier (CH); Grandjean, Michel Marcel Robert, 1242 Satigny (CH)
(74) Representative: De Colle, Piergiacomo

(56) References cited:
- US-A- 5 237 145
- US-A- 5 807 123

## Description

The present invention relates to a flexible electrical connection member for a wire electrical discharge machine comprising a machining generator, a function of threading/re-threading an electrode wire automatically and a machining contact support mounted on a contact holder mounting plate assembly on which said flexible electrical connection member is located and adapted to convey current from the machining generator to the machining contact support.

In known machines the electrode wire, close to the vertical position, is taut and paid out between two wire guides each installed in a machining head, an upper one and a lower one, at the machining zone. In general, the workpiece is machined in total immersion in a dielectric liquid and in addition, the wire is sprayed from above and from below with pressurized dielectric liquid injected through the machining heads.

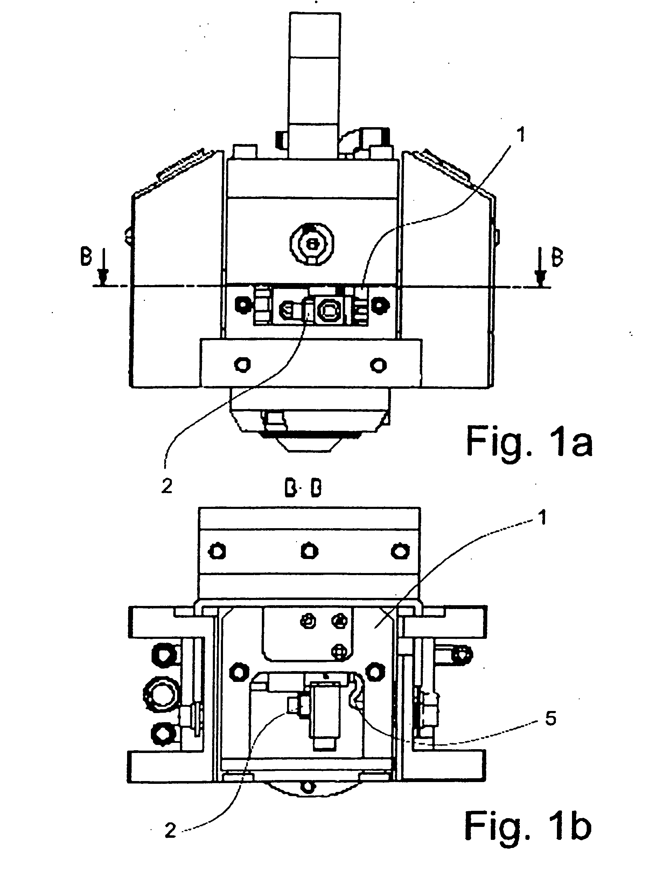

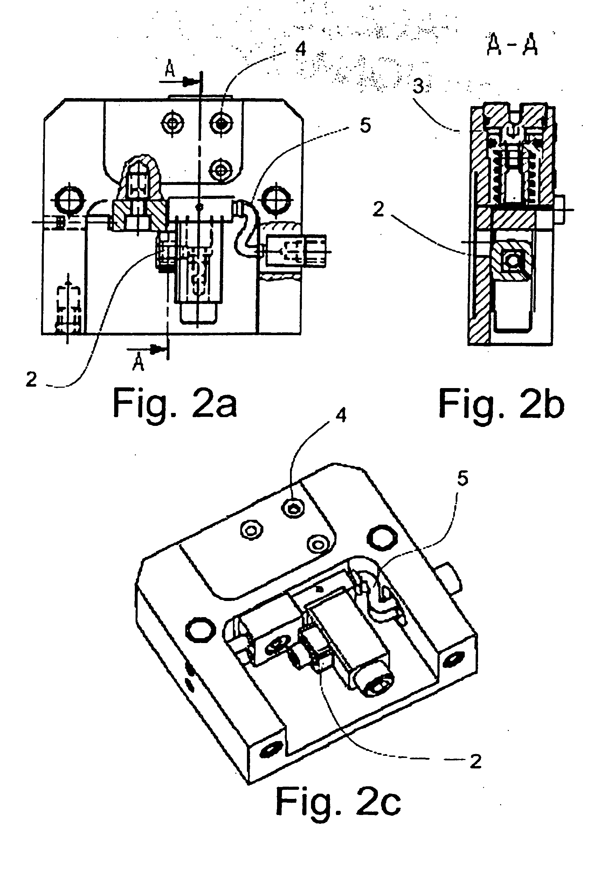

Figures 1a and 1b depict the upper machining head of a known wire electrical discharge machine in which the contact support mounting plate, to which the description below chiefly relates, is situated. Figure 1a is a head-on view of the upper machining head. Figure 1b is a view thereof from above in section on B-B. The electrode wire, not depicted, rubs against the rear face, viewed in Figure 1b, of the machining contact 2. The contact holder mounting plate assembly 1 is visible in the two views 1a and 1b in its surroundings. This same known contact holder mounting plate assembly is depicted alone in a view from above in Figure 2a.

The machining contacts, for example the upper contact 2, are retracted automatically to allow the operations of threading and re-threading the electrode wire, not depicted in the figures. This movement, with an amplitude of about 2 mm, is brought about by the pneumatic piston depicted in Figure 2b, under the pressure of compressed air injected into the chamber 3 via the orifice 4. The electrode wire rubs against the tungsten machining contact 2. The machining current is transmitted to the contact 2 via a flexible connection member 5 made up of an assembly of several conducting elements soldered together.

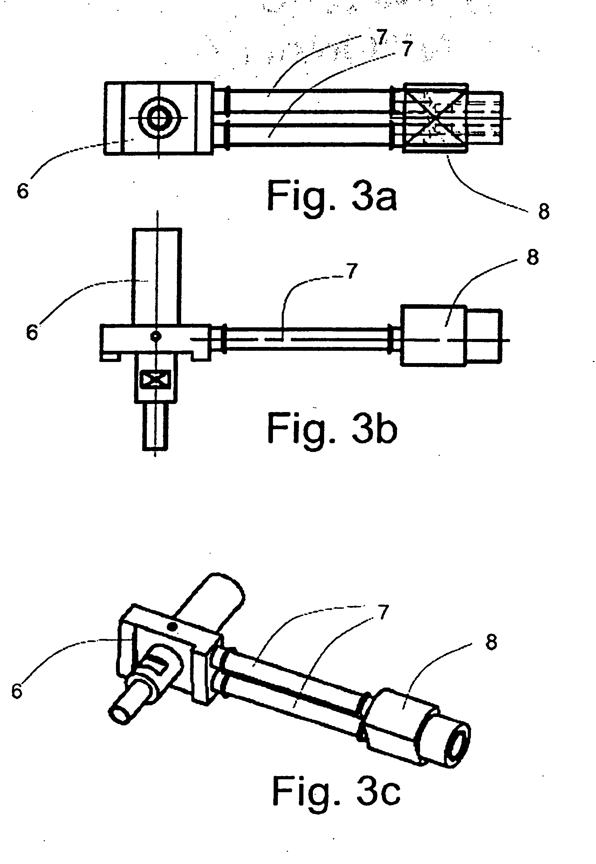

Figures 3a, 3b, 3c depict three views of this known flexible composite connecting member 5 before it is installed in the mounting plate of Figs. 2a, 2b. It is made up mainly of three elements. The first 6, placed on the same side as the contact 2, is a moving connector which follows the movements of the piston, Fig. 2b. The second is a collection of at least two flexible braided cables 7 tin-soldered to, on the one hand, the moving connector 6 and, on the other hand, the fixed connector 8, the third element of the said flexible connection 5, connected to the machining generator.

The collection of devices situated in the machining heads is subjected to a flow of dielectric liquid under pressure and to strong electric fields. The machining residues, the resulting corrosion deposits, and wearing of the contacts mean that the mounting plate has to be removed periodically. It should be noted that this operation needs to be performed at least once a week at best by the operator, and daily in the case of intense use; the said operation is described in detail in the customer maintenance manual that comes with the ROBOFIL machine, in the sections entitled "Contrôle et échange du contact d'usinage supérieur" , "Contrôler la propreté des blocs de la tête supérieure" etc.

Manual extraction of the flexible composite connection 5 or Fig. 3a, 3b, 3c entails twisting it in a way that is controlled to a greater or lesser extent. The braids 7 contain a great number of strands of copper which are very fragile and become brittle because of the machining residues associated with corrosion. What is more, the braids 7 experience fatigue due to the repeated movements of retracting and engaging the machining contact. These strands of copper end up breaking one after another, hence degrading the conductivity of this flexible connection and leading to a drop in machining performance. Furthermore, because of its assembly 6, 7, 8, the various materials in contact with one another create electrochemical coupling which accelerates the corrosion deterioration of this flexible connection. Its frequent replacement with a new component is a major disadvantage because of its cost and because of the drops in productivity brought about by the machine down-times.

A prior art document, US patent No 5,807,123 discloses a cradle convector for interconnecting a telephone to a base station. This cradle connector comprises an insulative housing with cavities and multiple terminals mounted in these cavities. The terminals comprise connection sections for electrical connection to an electrical circuitry of the base station, contact sections for electrical connection to the telephone and meanderings spring sections between the contact and the connection sections for allowing resilient biasing of the contact sections against a shorting bar which electrically interconnects the terminals. These multiple terminals interconnected by a shorting are well adapted for a telephone base station connection, but cannot be used in wire discharge machines as these terminals are fragile and would become brittle.

The object of the present invention is to remedy to the above mentioned disadvantages and in particular to those associated with the original flexible composite connection member 5.
The invention is characterized at this purpose by the features stated in the second part of independent claim 1, and in particular by the fact that the flexible electrical connection member is made up of one single piece made from e material that is a good conductor of electricity and that the body of said single piece has two series of lateral notches located on each side of its main axis and intended to confer to it good elasticity and to allow it to flex repeatedly, said flexible electrical connection member comprising a part of parallepipedal shape adapted to be attached to the machining contact support and integral with a part of cylindrical shape adapted to be connected to the machining generator.

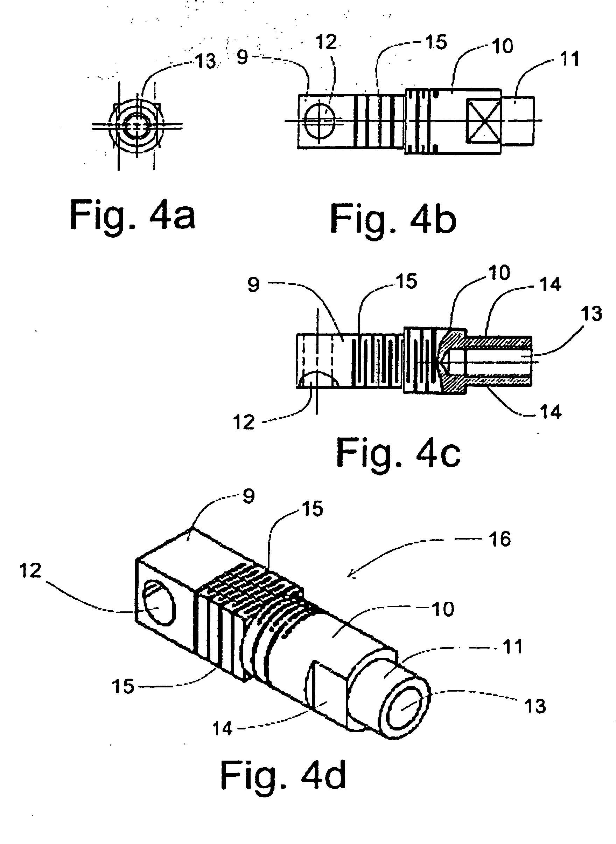

The object of the invention is thus achieved by creating a one-piece replacement part 16, Figures 4a, 4b, 4c and 4d, as defined in the first claim, made of a single material. This new part allows the machining current to be conveyed from the cables of the generator to the machining contact support 17 and has, by virtue of a double series of notches 15, an inherent elasticity that allows it without damage to undergo frequent fittings and removals and repeated movements of retracting and engaging the machining contact.

The simplicity of this new current conveyor allows more reliable handling on the part of the operator and reduces the risk of accidental damage. The new part 16 is machined from a single block of metal, and this makes it possible to eliminate several electrochemical coupling opportunities and reduce corrosion. The new part 16, the life of which is improved tenfold, is compatible with the mounting plates 1 already in service and has, amongst other pieces, been designed also to be able to be fitted to existing machines and improve their performance.

A preferred embodiment is explained with the aid of the figures.
Figure 1a is a front-on view of the upper machining head of a wire electrical discharge machine.
Figure 1b is a view from above of the same upper machining head, in section on B-B, showing the environment in which the piece underlying the invention is located.
Figure 2a is a view from above of the contact holder mounting plate assembly 1 extracted from the upper machining head.
Figure 2b is a view in section on A-A of the pneumatic piston for retracting and engaging the machining contacts.
Figure 2c is a perspective view of the same contact holder mounting plate assembly 1 extracted from the upper machining head.
Figures 3a, 3b and 3c are views of the composite piece 5 underlying the invention and serving as a member for conveying current.
Figures 4a, 4b, 4c and 4d are views of the one-piece current conveying member 16 that forms the subject of the invention and is intended to replace the previous composite piece 5.

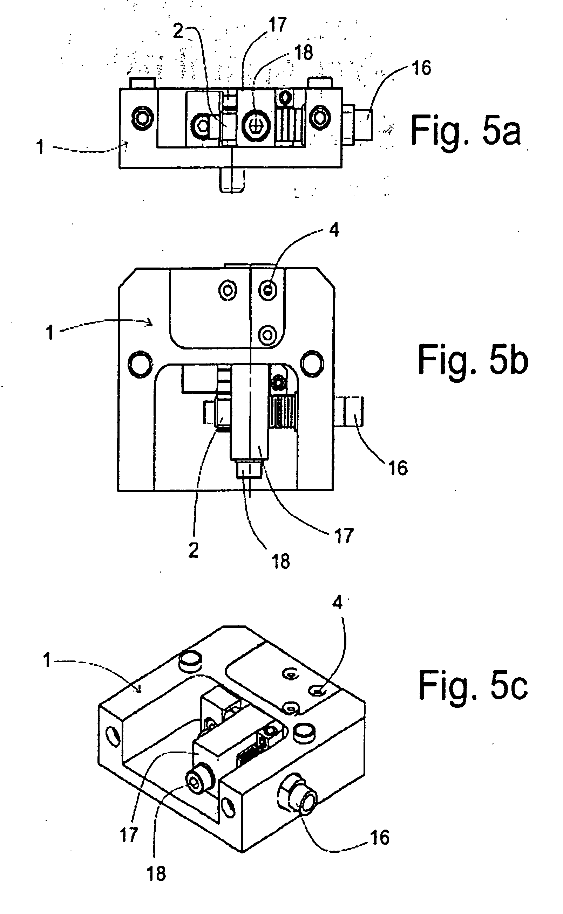

Figures 5a, 5b and 5c are views of the contact holder mounting plate assembly 1 extracted from the upper machining head and equipped with the new current conveying member 16 that forms the subject of the invention.

The use of bronze BS1 provides good electrical conductivity and insensitivity to corrosion. To ensure ease of fitting to the original mounting plate, the new part 16 is made of a milled part of parallelepipedal shape 9, contiguous with a part of cylindrical shape 10 and 11 turned to two different diameters. The parallelepipedal shape, suited to good transmission of current to the contact support 17, comprises a plain through-bore 12 perpendicular to the overall axis of the piece and intended to accommodate the screw 18 that allows attachment to the contact support 17

The cylindrical part comprises a blind threaded axial bore 13 intended to accommodate the screw, not depicted, that allows attachment to the cable connected to the electric pulse generator. The smaller-diameter cylindrical part 11 has a symmetrical double chamfer 14 matched to an original mating component, not depicted, and comprising flats. This same symmetric double chamfer 14 also allows rotation to be prevented, using an open-ended spanner, during fitting/removal operations.

To ensure that this new one-part piece has good elasticity and without compromising its electrical conductivity, two series of 7 narrow notches 15, less than 0.5 mm wide, are made at right angles to the overall axis and on each side of the body of the piece. The said notches penetrate the body of the piece parallel to the axis of the plain bore 12 in the parallelepipedal part 9 and in the larger-diameter cylindrical part 10.

Of course, the embodiment described hereinabove is not in any way limiting and can be adapted while at the same time respecting the dimensions of the original pieces that make up the contact support mounting plate 1 of the upper machining head, Figs. 1a, 1b. For example, the narrow notches 15 may be more or less numerous and have a width in excess of 0.5 mm; the plain through-bore 12 may have a non-circular cross section; the cylindrical part 10, 11 may have a square or rectangular cross section; the metal may be chosen from other elastic materials that are good conductors of electricity.

## Claims

1. Flexible electrical connection member (16) for a wire electrical discharge machine comprising, a machining generator, a function of automatically threading/re-threading an electrode wire and a machining contact support (17) mounted on a contact holder mounting plate assembly (1) on which said flexible electrical connection member (16) is located and adapted to convey current from the machining generator to the machining contact support (17), **characterized in that** it is made of one single piece made from a material that is a good conductor of electricity and **in that** the body of said single piece has two series of lateral notches (15) located on each side of its main axis and intended to confer to it good elasticity and to allow it to flex repeatedly, said flexible electrical connection member (16) comprising a part of parallelepipedal shape (9) adapted to be attached to the machining contact support (17) and integral with a part of cylindrical shape (10, 11) adapted to be connected to the machining generator.

2. Flexible electrical connection member according to Claim 1, **characterized in that**, in its part of parallelepipedal shape (9), it comprises a through-bore (12) perpendicular to the overall axis of the single piece and parallel to the notches (15), the said bore being intended to accommodate the screw (18) that allows attachment to the contact support (17).

3. Flexible electrical connection member according to Claims 1 or 2, **characterized in that**, in its part of cylindrical shape (10, 11), it comprises a blind threaded axial bore (13) intended to accommodate a screw that allows attachment to a cable connected to the machining generator.

4. Flexible electrical connection member according to Claims 1 or 3, **characterized in that**, its part of cylindrical shape (10, 11) has two different diameters and a symmetric double chamfer (14) to prevent it from rotating.

5. Flexible electrical connection member according to one of the preceding Claims, **characterized in that** it is made of bronze BS1.

## Patentansprüche

1. Flexibles elektrisches Verbindungselement (16) für eine Drahterosionsmaschine mit einem Bearbeitungsgenerator, einer Funktion des automatischen Einfädelns/Wiedereinfädelns einer Drahtelektrode und einer Bearbeitungskontaktstütze (17), die an einer Kontakthaltermontageplattenanordnung (1) montiert ist, auf der das flexible elektrische Verbindungselement (16) platziert ist, das geeignet ist, Strom vom Bearbeitungsgenerator zur Bearbeitungskontaktstütze (17) zu führen, **dadurch gekennzeichnet, dass** es aus einem einzigen Stück hergestellt ist, das aus einem Material hergestellt ist, das elektrisch gut leitend ist, und dass der Körper des einzigen Stücks zwei Reihen von seitlichen Kerben (15) hat, die auf jeder Seite seiner Hauptachse angeordnet sind und dazu dienen, ihm hohe Elastizität zu verleihen, und ihm gestatten, sich wiederholt zu biegen, wobei das flexible elektrische Verbindungselement (16) ein Teil (9) mit parallelflacher Form umfasst, das geeignet ist, an der Bearbeitungskontaktstütze (17) angebracht zu werden, und mit einem Teil (10, 11) mit zylindrischer Form integral ist, das geeignet ist, mit dem Bearbeitungsgenerator verbunden zu werden.

2. Flexibles elektrisches Verbindungselement nach Anspruch 1, **dadurch gekennzeichnet, dass** es in seinem Teil (9) mit parallelflacher Form eine Durchgangsbohrung (12) umfasst, die senkrecht zur Gesamtachse des einzigen Stücks und parallel zu den Kerben (15) verläuft, wobei die Bohrung dazu dient, die Schraube (18) aufzunehmen, die ein Anbringen an die Kontaktstütze (17) gestattet.

3. Flexibles elektrisches Verbindungselement nach Anspruch 1 oder 2, **dadurch gekennzeichnet, dass** es in seinem Teil (10, 11) mit zylindrischer Form eine axiale Gewindesacklochbohrung (13) umfasst, die dazu dient, eine Schraube aufzunehmen, die ein Anbringen an einem mit dem Bearbeitungsgenerator verbundenen Kabel gestattet.

4. Flexibles elektrisches Verbindungselement nach Anspruch 1 oder 3, **dadurch gekennzeichnet, dass** sein Teil (10, 11) mit zylindrischer Form zwei verschiedene Durchmesser und eine symmetrische doppelte Abkantung (14) hat, um zu verhindern, dass es sich dreht.

5. Flexibles elektrisches Verbindungselement nach einem der vorhergehenden Ansprüche, **dadurch gekennzeichnet, dass** es aus Bronze BS1 hergestellt ist.

## Revendications

1. Organe de connexion électrique souple (16) pour une machine d'électroérosion par fil comportant un générateur d'usinage, une fonction d'enfilage-ré-enfilage automatique d'un fil-électrode, et un support de contact d'usinage (17) monté sur un ensemble de plaque de montage de support de contact (1) sur lequel ledit organe de connexion électrique souple (16) est situé et destiné à transporter le courant depuis le générateur d'usinage jusqu'au support de contact d'usinage (17), **caractérisé par le fait qu'**il est constitué d'une pièce unique dans un matériau bon conducteur de l'électricité et que le corps de ladite pièce unique comporte deux séries d'encoches latérales (15) de part et d'autre de son axe principal destinées à lui conférer une bonne élasticité et lui permettre une flexion répétée, ledit organe de connexion électrique souple (16) comprenant une partie de forme parallélépipédique (9) prévue pour être attachée au support de contact d'usinage (17) et intégrée à une partie de forme cylindrique (10, 11) prévue pour être connectée au générateur d'usinage.

2. Organe de connexion électrique souple selon la revendication 1, **caractérisé par le fait qu'**il comporte dans sa partie de forme parallélépipédique (9), un alésage traversant (12) perpendiculaire à l'axe général de la pièce unique et parallèle aux encoches (15), ledit alésage étant destiné à recevoir la vis (18) qui permet la fixation au support contact (17).

3. Organe de connexion électrique souple selon la revendication 1 ou 2, **caractérisé par le fait qu'**il comporte dans sa partie de forme cylindrique (10, 11) un alésage axial fileté borgne (13) destiné à recevoir une vis qui permet la fixation à un câble relié au générateur d'usinage.

4. Organe de connexion électrique souple selon la revendication 1 ou 3, **caractérisé par le fait que** sa partie cylindrique (10, 11) a deux diamètres différents et un double chanfrein symétrique (14) permettant son blocage en rotation.

5. Organe de connexion électrique souple selon l'une des revendications précédentes, **caractérisé par le fait qu'**il est constitué de bronze BS1.
